# EUROPEAN PATENT APPLICATION

(11) **EP 4 847 348 A1**
(43) Date of publication of application: **02.12.2026**
(21) Application number: 26171006.5
(22) Date of filing: 07.04.2026
(51) Int. Cl.: B62D 21/11, B60G 1/00, B60K 1/00

(54) **VEHICLE FRONT STRUCTURE**

(30) Priority: 30.05.2025 JP 2025091010
(71) Applicant: Suzuki Motor Corporation, Hamamatsu-shi, Shizuoka 432-8611 (JP)
(72) Inventor: Tomohiro, KOIKE, Hamamatsu-shi, 432-8611 (JP); Yosuke, KOIKE, Hamamatsu-shi, 432-8611 (JP); Hayato, ARAI, Hamamatsu-shi, 432-8611 (JP)
(74) Representative: Plasseraud IP

(57) **Abstract**

[Problem to be Solved] To more reliably secure collision performance without leading to a decrease in holding rigidity for a drive portion.

[Solution] A vehicle front structure 100 includes a suspension frame 50 including a pair of side frames 10 and 10, a frame main body 20, and arm holding portions 30, and a pair of front side members 60 and 60, a plurality of support members 80 supporting a drive portion M are attached to the suspension frame 50, a coupling portion 51 for coupling to the front side members 60 is provided at each of front frame portion 11 and an intermediate frame portion 13 of each side frame 10 and an end portion of the frame main body 20 in a vehicle width direction, the front frame portion 11 includes a front frame base portion 111, a rear curved portion 112, a front frame inclined portion 113, a front curved portion 114, and a front frame distal end extending portion 115, and an inner surface 10b of the front frame distal end extending portion 115 in the vehicle width direction is located on an outer side in the vehicle width direction relative to an outer surface 10a of the front frame base portion 111 in the vehicle width direction.

## Description

### [Technical Field]

The present invention relates to vehicle front structures.

### [Background Art]

Patent Literature 1 describes a sub-frame (hereinafter, referred to as a suspension frame) that is disposed at a lower portion of a vehicle front portion and supports a link structure member of a suspension in a swingable manner while supporting a power unit. The suspension frame disclosed in Patent Literature 1 includes a front skeleton portion extending in the vehicle width direction, a rear skeleton portion spaced apart from the front skeleton portion on the rear side and extending in the vehicle width direction, and left and right skeleton portions extending in the vehicle front-rear direction at left and right outer parts of the suspension frame and spaced apart from each other in the vehicle width direction, and is formed into a substantially rectangular shape as a whole. The link structure member of the suspension is supported in a swingable manner by the suspension frame at the left and right skeleton portions via rubber bushes or the like, and a support member that supports an engine of the power unit is fixed to the left and right skeleton portions via bolts or the like. Moreover, the suspension frame is attached to a vehicle body via attachment pins provided at both end portions of the front skeleton portions and attachment holes provided at both end portions of the rear skeleton portion in the vehicle front structure disclosed in Patent Literature 1. In other words, fixing points of the suspension frame to the vehicle body are provided at the front ends and the rear ends of the outer parts of the suspension frame in the vehicle width direction in the structure disclosed in Patent Literature 1.

The vehicle front structure is required to reduce displacement of the power unit into a passenger compartment at the time of collision on the vehicle front side in order to protect passengers. In this regard, the structure disclosed in Patent Literature 1 is provided with notch portions for attaching a swing shaft at outer portions of the left and right skeleton portions in the vehicle width direction such that the suspension frame is bent starting from the notch portions and the power unit is pulled down with the bending of the suspension frame at the time of collision. In this manner, the structure disclosed in Patent Literature 1 secures passenger protecting performance (hereinafter, referred to as collision performance as appropriate) by inducing bending deformation of the suspension frame and reducing displacement of the power unit into the passenger compartment at the time of collision.

### [Citation List]

### [Patent Literature]

[Patent Literature 1] JP 2003-002229 A

### [Summary of Invention]

### [Problem to be Solved by the Invention]

In addition, electric vehicles with power units (drive portions) having traveling motors disposed at vehicle front portions have been actively developed in recent years. Thus, it is considered that the structure disclosed in Patent Literature 1 may be adopted as a front structure for vehicles including electric vehicles and the suspension frame is used as a frame for supporting a power unit having a traveling motor.

However, the notch portions provided in the suspension frame to secure collision performance in the structure of Patent Literature 1 leads to a decrease in rigidity. Also, there is a concern that intended bending deformation may not be caused by the notch portions inducing the bending deformation and it may not be possible to reliably secure the collision performance. Furthermore, since the fixing points of the suspension frame to the vehicle body are set only at the front ends and the rear ends of the outer parts of the suspension frame in the vehicle width direction in the structure of Patent Literature 1, deflection due to a load of the power unit, which is a heavy object, is likely to occur in the left and right skeleton portions. In other words, there is room for improvement in the structure of Patent Literature 1 from the viewpoint of holding rigidity of the suspension frame for the power unit.

The present invention has been made in order to solve the above problem, and an object thereof is to provide a vehicle front structure capable of more reliably securing collision performance without leading to a decrease in holding rigidity for a drive portion.

### [Means for Solving the Problem]

According to an aspect of the present invention to achieve the above object, there is provided a vehicle front structure including a suspension frame including: a pair of side frames that extend in a vehicle front-rear direction and are spaced apart from each other in a vehicle width direction at a lower portion of a vehicle front portion; a frame main body that extends in the vehicle width direction and connects rear portions of the pair of side frames; and an arm holding portion that holds a suspension arm in a swingable manner, wherein a plurality of support members supporting a drive portion that generates a traveling power are attached to the suspension frame. The vehicle front structure includes a pair of front side members that extend in the vehicle front-rear direction and are spaced apart from each other in the vehicle width direction above the suspension frame, each of the pair of side frames includes a front frame portion, a rear frame portion that is located on a vehicle rear side relative to the front frame portion and extends in the vehicle front-rear direction, and an intermediate frame portion that connects a rear end of the front frame portion to a front end of the rear frame portion, a coupling portion for coupling to a corresponding front side member out of the pair of front side members is provided at each of the front frame portion, the intermediate frame portion, and an end portion of the frame main body in the vehicle width direction, the front frame portion includes a front frame base portion that extends toward a vehicle front side from a front end of the intermediate frame portion, a rear curved portion that extends to be curved outward in the vehicle width direction and obliquely forward from a front end of the front frame base portion, a front frame inclined portion that extends obliquely forward such that the front frame inclined portion is continuous with a front end of the rear curved portion, a front curved portion that extends to be curved toward the vehicle front side from a front end of the front frame inclined portion, and a front frame distal end extending portion that extends toward the vehicle front side such that the front frame distal end extending portion is continuous with a front end of the front curved portion, and an inner surface of the front frame distal end extending portion in the vehicle width direction is located on an outer side in the vehicle width direction relative to an outer surface of the front frame base portion in the vehicle width direction.

### [Advantageous Effect of Invention]

According to an aspect of the present invention, it is possible to provide a vehicle front structure capable of more reliably securing collision performance without leading to a decrease in holding rigidity for a drive portion.

### [Brief Description of Drawings]

[Figure 1] Figure 1 is a schematic perspective view showing an embodiment of a vehicle front structure according to the present invention.
[Figure 2] Figure 2 is a schematic top view of the vehicle front structure.
[Figure 3] Figure 3 is a schematic top view of the vehicle front structure from which a front side member is omitted.
[Figure 4] Figure 4 is an enlarged top view of the portion A shown in Figure 3.
[Figure 5] Figure 5 is an enlarged side view of the portion A shown in Figure 3 when seen from the inner side in the vehicle width direction.
[Figure 6] Figure 6 is a sectional view of a front frame portion along line B-B shown in Figure 4.
[Figure 7] Figure 7 is an enlarged perspective view including a lower surface of the front frame portion.
[Figure 8] Figure 8 is a sectional view of the front frame portion along line C-C shown in Figure 4.

### [Mode for Carrying Out the Invention]

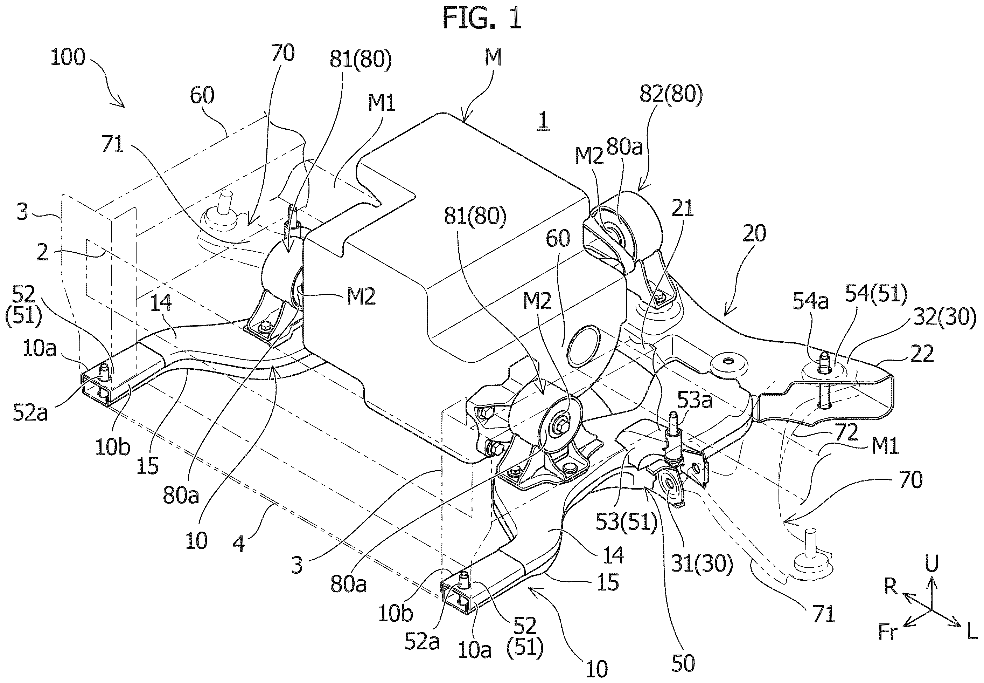

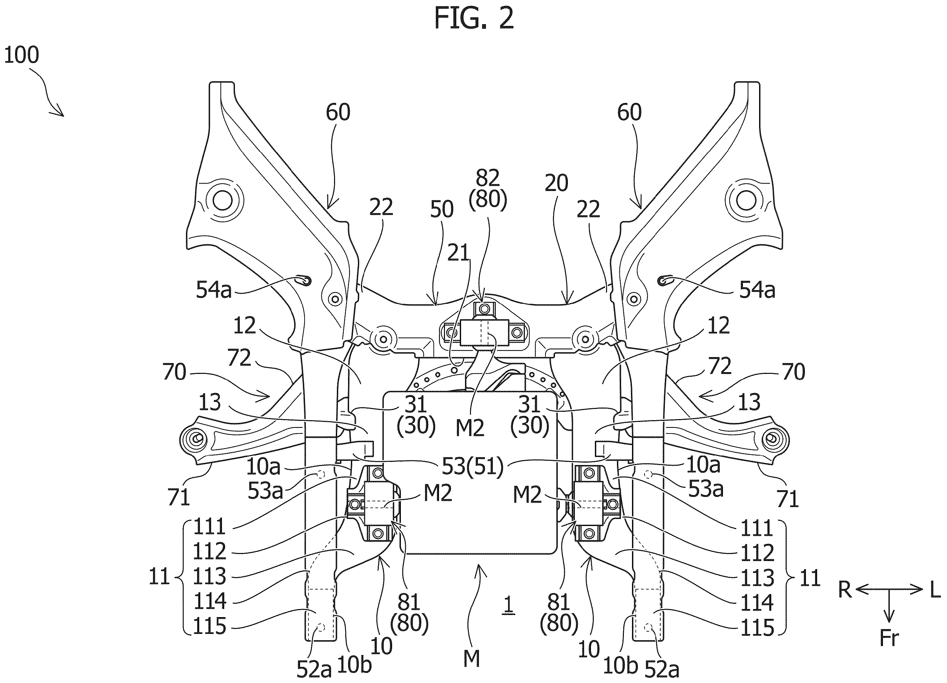

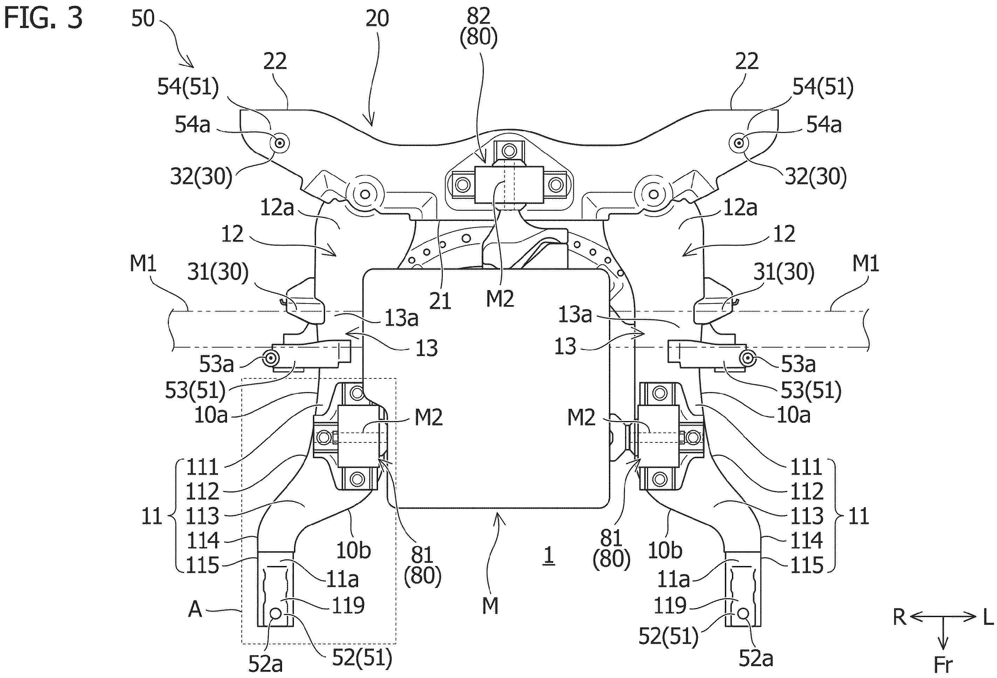

Hereinafter, an embodiment of the present invention will be described with reference to the accompanying drawings. Figures 1 to 4 are diagrams for explaining a vehicle front structure 100 according to an embodiment of the present invention, Figure 1 is a schematic perspective view of the vehicle front structure 100 seen from the vehicle front side and the obliquely upper side, Figure 2 is a schematic top view seen from the upper side, and Figure 3 is a schematic top view with a front side member 60, which will be described later, omitted therefrom. Note that in the drawings, the direction of the arrow Fr indicates the front side in the vehicle front-rear direction, the direction of the arrow U indicates the upper side in the vehicle up-down direction, the direction of the arrow R indicates the right side in the vehicle width direction in a state in which a passenger inside a vehicle faces the vehicle front side, and the direction of the arrow L indicates the left side in the vehicle width direction in the state in which a passenger inside the vehicle faces the vehicle front side. "Front" and "rear" in the following description correspond to the front side and the rear side in the vehicle front-rear direction, "up" and "down" correspond to the upper side and the lower side in the vehicle up-down direction, and "left" and "right" correspond to the left side and the right side in the vehicle width direction in a state in which an occupant inside the vehicle views the vehicle front side.

The vehicle front structure 100 is a front structure of a vehicle that is driven by a drive portion M that generates a traveling power. Although not particularly limited, the vehicle front structure 100 is applied, for example, to a front structure of an electric vehicle driven by the drive portion M including a traveling motor in the present embodiment. The drive portion M generates a power for driving front wheels and drives the front wheels, for example. The drive portion M may also be referred to as a motor unit.

The drive portion M is disposed in a power compartment 1 provided at a vehicle front portion. The drive portion M is a drive device including an electric motor. The power compartment 1 is also referred to as a power unit compartment. The power compartment 1 is formed by a dash panel, a front bumper, a front hood extending from an upper end portion of the dash panel up to an upper end portion of the front bumper, which are not shown, and the like. Also, the dash panel divides the power compartment 1 and a passenger compartment behind the power compartment 1.

Referring to Figures 1 to 3, the vehicle front structure 100 includes a suspension frame 50 and a pair of front side members 60 and 60. The suspension frame 50 is supported by the front side members 60.

The suspension frame 50 is disposed in a bottom portion region of the power compartment 1. The suspension frame 50 is a frame for supporting a front suspension and is a member with high rigidity. The suspension frame 50 is formed as one component by joining a plurality of pressed steel sheet members, for example, by spotwelding or the like. Although not shown in the drawing, a battery unit that supplies a power to the electric motor of the drive portion M is disposed behind a rear portion of the suspension frame 50 and below a floor portion of the passenger compartment.

In the vehicle front structure 100, the suspension frame 50 is also used as a frame supporting the drive portion M. Suspension arms 70 of a front suspension are attached to the suspension frame 50 in a swingable manner. Furthermore, a plurality of support members 80 (81, 81, and 82) supporting the drive portion M are attached to the suspension frame 50. Note that structures and the like of the suspension frame 50, the suspension arms 70, and the support members 80 will be described later.

The pair of front side members 60 and 60 are members with high rigidity constituting parts of a structure member (vehicle body skeleton) of a vehicle body at the vehicle front portion. In other words, the suspension frame 50 is supported by the front side members 60 constituting parts of the structure member on the side of the vehicle body. The pair of front side members 60 and 60 extend in the vehicle front-rear direction above the suspension frame 50 and are spaced apart from each other in the vehicle width direction.

Each front side member 60 is formed as one member by joining a plurality of pressed steel sheet members, for example, by spotwelding or the like. Each front side member 60 extends forward from an outer part of a lower portion of the dash panel, which is not shown, in the vehicle width direction. A rear end portion of each front side member 60 is joined to the lower portion of the dash panel by spotwelding or the like. The front side member 60 is inclined upward as it extends from the rear side toward the front side and linearly extends forward from a part on the side further forward than the substantially center portion toward the front side in a side view seen from one side in the vehicle width direction. In Figure 1, the outer shape of the part on the side further forward than the center portion of the front side member 60 is shown by the two-dotted chain line. A majority of the part, except for the rear portion of each front side member 60 (that is, a majority of the part including the front portion and the center portion of the front side member 60 in the vehicle front-rear direction) is spaced apart from a pair of side frames 10 and 10, which will be described later, of the suspension frame 50 on the vehicle upper side and extends in the vehicle front-rear direction. The front side member 60 has a closed sectional structure with a substantially rectangular shape (in other words, a quadrangular tubular shape) in a sectional view perpendicular to the longitudinal direction (vehicle front-rear direction), for example.

In the example shown, a front end portion of one of the front side members 60 and a front end portion of the other front side member 60 are coupled to each other via a bumper member 2, and the front end portion of each front side member 60 is supported from the lower side by a radiator support brace 3. Note that the bumper member 2, the radiator support brace 3, and a radiator lower cross frame 4, which will be described later, are not shown in Figures 2 and 3, and the front side members 60 is also not shown as described above in Figure 3.

The bumper member 2 is a member that supports the front bumper, which is not shown, from the rear surface side and extends in the vehicle width direction along the rear surface of the front bumper. The radiator support brace 3 is a brace that receives a load of a radiator (a part including an evaporator of a refrigerant circuit for air conditioning), which is not shown, and is also a member that supports the front end portions of the front side members 60 from the lower side. The radiator support brace 3 is welded to the front end portions of the front side members 60 and extends to project on the vehicle lower side relative to the lower surfaces of the front side members 60. Also, in the example shown, the front end portions of the left and right front side members 60 are connected to each other via the bumper member 2 by outer portions of the bumper member 2 in the vehicle width direction being fastened to the radiator support brace 3 with fastening members (not shown) such as bolts.

In the example shown, the radiator support brace 3 is disposed on upper surfaces of front end portions of side frames 10, which will be described later, of the suspension frame 50, and is supported by the suspension frame 50 (side frames 10) from the lower side. Also, the radiator support brace 3 connects front end portions of the front side members 60 and the front end portions of the side frames 10.

Next, structures and the like of the suspension frame 50, the suspension arms 70, and the support members 80 will be described.

The suspension frame 50 includes the pair of side frames 10 and 10, a frame main body 20, and arm holding portions 30.

The pair of side frames 10 and 10 extend in the vehicle front-rear direction at a lower portion of the vehicle front portion and are spaced apart from each other in the vehicle width direction. Each side frame 10 is formed as one member by joining a plurality of pressed steel sheet members by spotwelding or the like. In the present embodiment, each side frame 10 is formed into a tubular shape. Specifically, each side frame 10 has a tubular closed sectional structure, specifically a substantially rectangular closed sectional structure (in other words, a quadrangular tubular hollow structure) in a sectional view perpendicular to the longitudinal direction (vehicle front-rear direction) of the side frame 10. Each side frame 10 is disposed below each front side member 60. Each side frame 10 extends substantially forward from the location below a rear portion of each front side member 60 toward the front bumper (not shown). The front end location of each side frame 10 is aligned with the front end location of each front side member 60.

Each of the pair of side frames 10 and 10 includes a front frame portion 11, a rear frame portion 12, and an intermediate frame portion 13. The front frame portion 11 constitutes the front portion of the side frame 10 and extends substantially in the vehicle front-rear direction. The rear frame portion 12 is located on the vehicle rear side relative to the front frame portion 11 and linearly extends in the vehicle front-rear direction. In the example shown, the rear frame portion 12 is located on the vehicle lower side relative to the front frame portion 11 in the vehicle up-down direction. The intermediate frame portion 13 connects a rear end of the front frame portion 11 to a front end of the rear frame portion 12. An upper surface 13a of the intermediate frame portion 13 is inclined so as to approach the front side member 60 as it extends from the side of the rear frame portion 12 toward the side of the front frame portion 11. In other words, the side frame 10 is bent in a crank shape at an intermediate portion of the side frame 10 in the longitudinal direction such that a front part of the side frame 10 (an upper surface 11a of the front frame portion 11) is located on the upper side relative to a rear part of the side frame 10 (an upper surface 12a of the rear frame portion 12).

The frame main body 20 extends in the vehicle width direction and connects the rear portions of the pair of side frames 10 and 10. The frame main body 20 is formed as one member by joining at least two upper and lower pressed steel sheet members, for example, by spotwelding or the like. The frame main body 20 has a tubular closed sectional structure, specifically, substantially a rectangular closed sectional structure (in other words, a quadrangular tubular hollow structure) in a sectional view perpendicular to the longitudinal direction of the frame main body 20 (vehicle width direction). A rear end portion of each side frame 10 is joined to an outer part in the vehicle width direction of a front wall 21 of the frame main body 20 facing the vehicle front side by spotwelding or the like. Both end portions of the frame main body 20 in the vehicle width direction constitute projecting portions 22 projecting on the side further outward than the rear ends of the side frames 10 in the vehicle width direction. Outer end portions of the projecting portions 22 in the vehicle width direction are opened outward in the vehicle width direction.

The arm holding portions 30 are parts that hold the suspension arms 70 in a swingable manner. Each arm holding portion 30 includes a front arm holding portion 31 and a rear arm holding portion 32.

The front arm holding portion 31 holds a front end portion of each suspension arm 70 in a vertically swingable manner. The front arm holding portion 31 is provided at a part close to and behind the center of the side frame 10 in the vehicle front-rear direction (the rear part of an outer surface 10a of the intermediate frame portion 13). The rear arm holding portion 32 holds the rear end portion of the suspension arm 70 in a swingable manner. The rear arm holding portion 32 is provided at the end portion of the frame main body 20 in the vehicle width direction (that is, the projecting portion 22). Furthermore, the frame main body 20 is a main frame that extends in the vehicle width direction and connects the left and right rear arm holding portions 32. The suspension frame 50 can easily obtain a characteristic that it is strong against a lateral load from the left and right suspension arms 70 by the frame main body 20 causing the suspension frame 50 to extend in the left-right direction between the left and right rear arm holding portions 32.

In the vehicle front structure 100, the drive portion M includes a part disposed between the pair of side frames 10 and 10 in the vehicle width direction. Also, the suspension frame 50 is formed in a shape in which the part thereof corresponding to the region where the drive portion M is disposed is open on the vehicle front side. The suspension frame 50 is formed in a U shape open on the vehicle front side as a whole except for the left and right projecting portions 22.

Referring to Figures 1 and 2 here, the suspension arm 70 includes a front arm portion 71 coupled to the front arm holding portion 31 and a rear arm portion 72 coupled to the rear arm holding portion 32, although not particularly limited thereto. The front arm portion 71 includes an inner end portion that is coupled to the front arm holding portion 31 in a freely swingable manner and an outer end portion that is coupled to a knuckle of a front wheel, which is not shown, in a freely swingable manner. The front arm portion 71 extends substantially in the vehicle width direction and couples the suspension frame 50 to the front wheel. The rear arm portion 72 extends substantially backward from an intermediate portion of the front arm portion 71 toward the rear arm holding portion 32. The rear arm portion 72 includes a rear end portion coupled to the rear arm holding portion 32 in a freely swingable manner. The suspension arm 70 is formed substantially in an L shape by the front arm portion 71 extending substantially in the vehicle width direction and the rear arm portion 72 extending substantially in the vehicle front-rear direction.

The suspension frame 50 is supported by the front side members 60, which are structure members of the vehicle body, as described above, and the suspension frame 50 is provided with a plurality of coupling portions 51 which are parts that are detachably coupled to the front side members 60.

In the vehicle front structure 100, the coupling portions 51 that are detachably coupled to a corresponding front side member 60 out of the pair of front side members 60 and 60 are provided at the front frame portion 11, the intermediate frame portion 13, and an end portion of the frame main body 20 of the suspension frame 50 in the vehicle width direction, respectively. In other words, the plurality of coupling portions 51 include a front coupling portion 52, an intermediate coupling portion 53, and a rear coupling portion 54.

The front coupling portion 52 is the coupling portion 51 provided at the front frame portion 11. The intermediate coupling portion 53 is the coupling portion 51 provided at the intermediate frame portion 13. The rear coupling portion 54 is the coupling portion 51 provided at the end portion of the frame main body 20 in the vehicle width direction. For example, each coupling portion 51 (52, 53, and 54) is set at a fastening point (fastening site) for fastening of the suspension frame 50 to the front side members 60 via bolts (52a, 53a, and 54a). The three coupling portions 51 (the front coupling portion 52, the intermediate coupling portion 53, and the rear coupling portion 54) are disposed at pitches of substantially equal intervals in the vehicle front-rear direction.

In the example shown, the front coupling portion 52 is set in the vicinity of the front end of the side frame 10 (front frame portion 11). On the upper surface 11a of the part including the front coupling portion 52, a lower end portion of the radiator support brace 3 joined to the front end portion of each front side member 60 is placed. Also, the front portion of the side frame 10 is detachably fastened to the lower end portion of the radiator support brace 3 via the bolt 52a penetrating through the side frame 10 at the front coupling portion 52. In this manner, the front portion of the side frame 10 is detachably coupled to the front side member 60, which is a structure member on the side of the vehicle body, via the bolt 52a and the radiator support brace 3 at the front coupling portion 52 and is fixed to the front portion of the front side member 60.

In the example shown, the intermediate coupling portion 53 projects upward from the upper surface 13a of the intermediate frame portion 13. The intermediate coupling portion 53 is coupled to the intermediate portion of the front side member 60 in the vehicle front-rear direction. The intermediate coupling portion 53 is located on the vehicle front side relative to the front arm holding portion 31. In addition, the intermediate coupling portion 53 is disposed at the front part of the upper surface 13a of the intermediate frame portion 13, the front arm holding portion 31 is disposed at the rear part of the outer surface 10a of the intermediate frame portion 13 as described above, and the intermediate coupling portion 53 is disposed to be adjacent to the front side of the front arm holding portion 31 at the intermediate frame portion 13. The front arm holding portion 31 is joined to the rear portion of the intermediate coupling portion 53. In this manner, the intermediate portion of the side frame 10 is detachably coupled to the front side member 60, which is a structure member of the vehicle body, via the bolt 53a at the intermediate coupling portion 53 and is fixed to the intermediate portion of the front side member 60.

In the example shown, the rear coupling portion 54 is set at each projecting portion 22 of the frame main body 20. Also, the projecting portion 22 is detachably fastened to the bottom portion of the rear portion of the front side member 60 via the bolt 54a. In this manner, the end portion of the frame main body 20 in the vehicle width direction is detachably coupled to the front side member 60, which is a structure member on the side of the vehicle body, via the bolt 54a at the rear coupling portion 54 and is fixed to the rear portion of the front side member 60. In the example shown, the rear coupling portion 54 also functions as the rear arm holding portion 32. Also, the bolt 54a for coupling the rear coupling portion 54 to the front side member 60 also serves as a swing shaft portion that supports the rear arm portion 72 in a swingable manner.

The suspension frame 50 is detachably attached to the front side member 60 via the bolts (52a, 53a, and 54a) at the front coupling portion 52, the intermediate coupling portion 53, and the rear coupling portion 54, respectively. Note that in the example shown, the front coupling portion 52 on the left side and the front coupling portion 52 on the right side are connected by the radiator lower cross frame 4. The radiator lower cross frame 4 extends in the vehicle width direction below the bumper member 2 and the suspension frame 50. End portions of the radiator lower cross frame 4 in the vehicle width direction are detachably attached to the front coupling portions 52 via the bolts 52a in a state in which the end portions of the radiator lower cross frame 4 in the vehicle width direction are caused to abut on the lower surfaces of the front coupling portions 52 of the side frames 10 of the suspension frame 50. In other words, the lower end portions of the radiator support brace 3 are fastened together (that is, are integrally fastened) with the front end portions of the side frames 10 and the radiator lower cross frame 4 via the bolts 52a.

The plurality of support members 80 include the side support members 81 disposed at each of the pair of side frames 10 and 10. In other words, the plurality of support members 80 include two side support members 81 and 81.

In the example shown, the plurality of support members 80 include the two side support members 81, 81 and the rear support member 82 disposed at the frame main body 20. Each of the support members 80 (81, 81, and 82) is made mainly of a metal member and a rubber member. Each support member 80 is attached (fixed) to the suspension frame 50 and is supported from the lower side by the suspension frame 50. Most of the part of each support member 80 is made of a metal solid member and has relatively high rigidity. The support members 80, the side support members 81, and the rear support member 82 may also be referred to as motor mounts, side motor mounts, and a rear motor mount, respectively.

Each side support member 81 is fixed to the front frame portion 11 of each side frame 10 of the suspension frame 50. The side frame 10 is bent in a crank shape at the intermediate portion of the side frame 10 in the longitudinal direction such that the front frame portion 11 is located on the upper side relative to the rear frame portion 12 as described above. Therefore, the side support member 81 is fixed to the front part of the side frame 10, which is a part at a high height location from the ground surface, and projects upward.

The rear support member 82 is fixed to the intermediate portion of the rear end portion of the suspension frame 50 in the vehicle width direction, that is, the upper surface of the center portion of the frame main body 20 in the vehicle width direction. In other words, the rear support member 82 is disposed at the center of the part (frame main body 20) of the suspension frame 50 between the left and right rear arm holding portions 32 (rear coupling portions 54) in the vehicle width direction.

In the example shown, a front portion of a right portion of the drive portion M is supported by the side support member 81 on the right side, a front portion of a left portion of the drive portion M is supported by the side support member 81 on the left side, and a rear portion of the drive portion M is supported by the rear support member 82. In this manner, the plurality of support members 80 are disposed to surround the drive portion M. Also, the drive portion M is supported by the suspension frame 50 in a mode in which the drive portion M is supported at three points by the three support members 80 (81, 81, and 82) fixed to the upper surface of the suspension frame 50.

The drive portion M includes a drive shaft portion M1 that transmits a drive power to the front wheels. The drive shaft portion M1 extends outward in the vehicle width direction from the left and right side portions. Referring to Figure 2, the drive shaft portion M1 is provided to pass between each side frame 10 and each front side members 60. Specifically, the drive shaft portion M1 is located between the rear portion of the side frame 10 and the front side member 60 in a side view seen from the vehicle width direction. More specifically, the drive shaft portion M1 extends in the vehicle width direction at a location immediately above the front arm holding portion 31 in the example shown. A bush 80a that supports a mounting shaft portion M2 for mounting that extends from the side of the drive portion M and is made of metal is attached to each of the support members 80 (81, 81, and 82), and each support member 80 supports the drive portion M by the bush 80a supporting the mounting shaft portion M2.

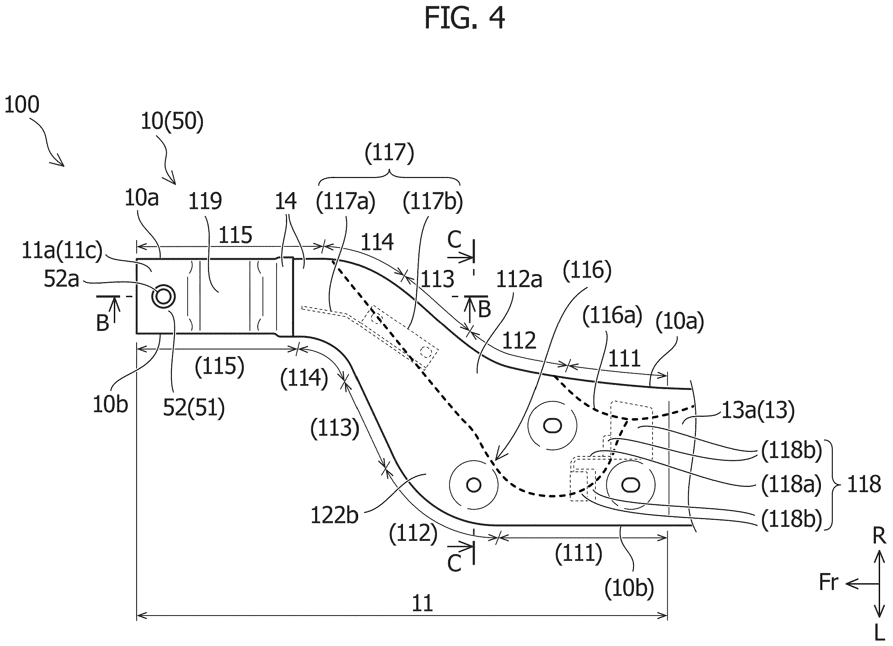

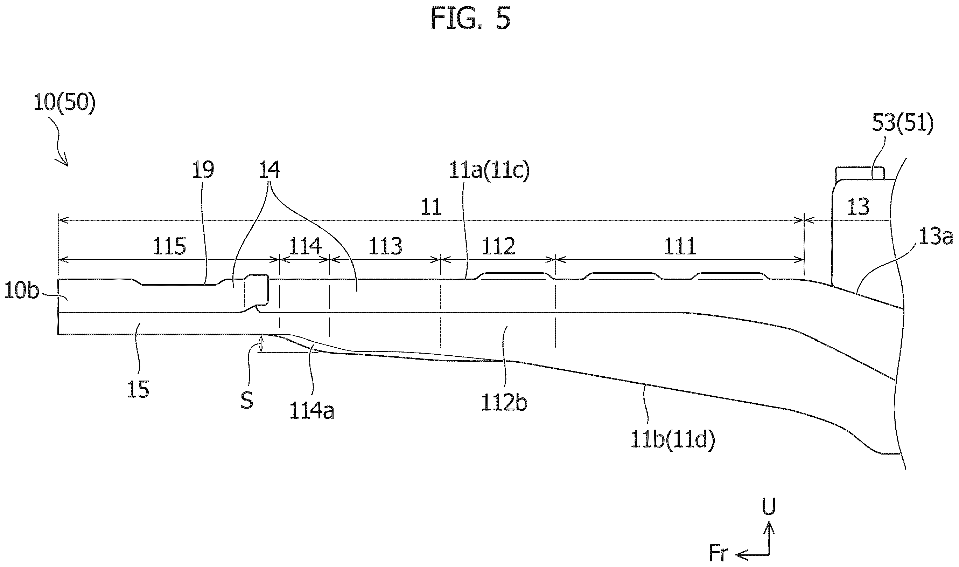

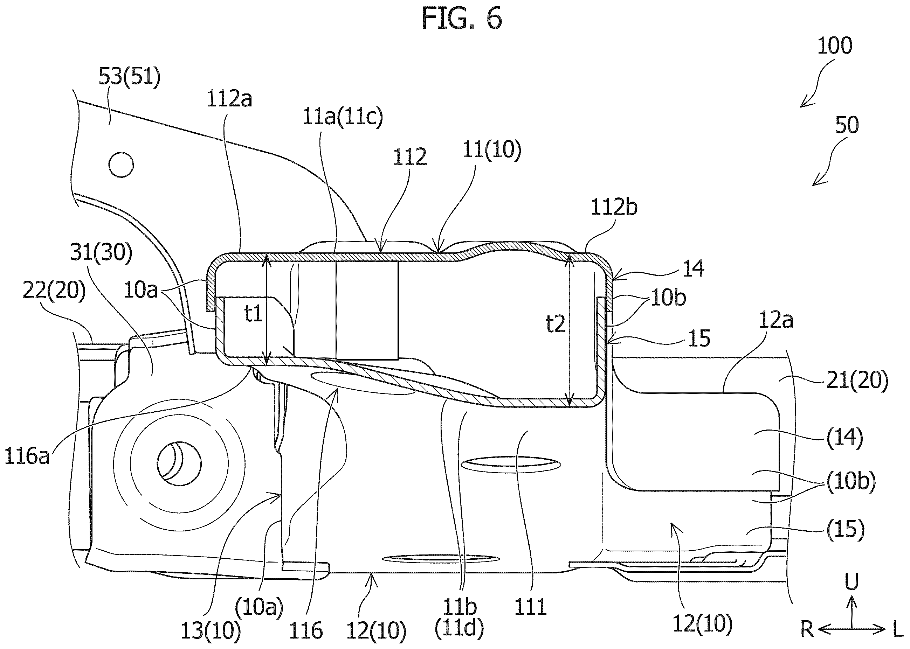

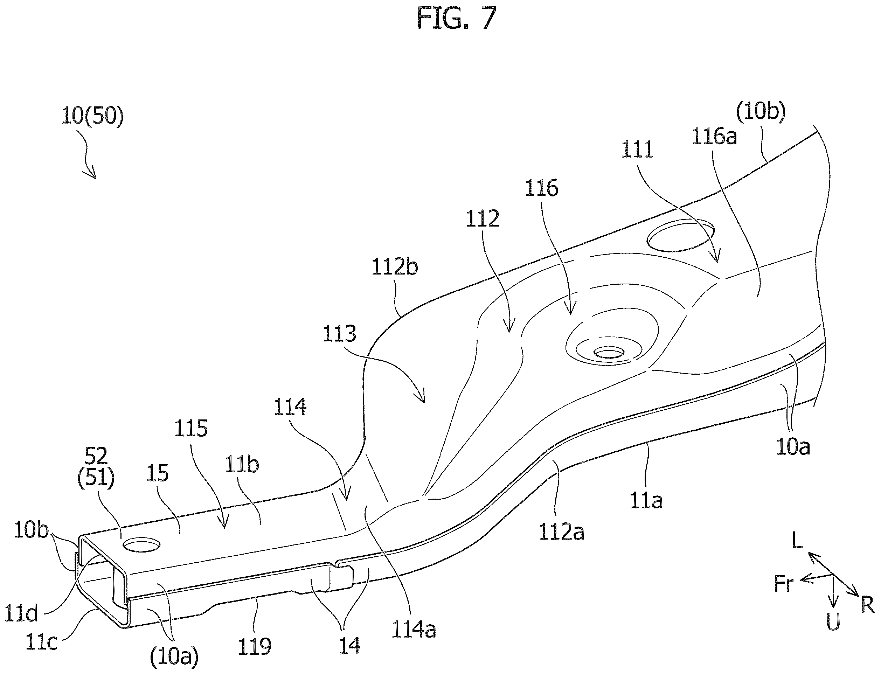

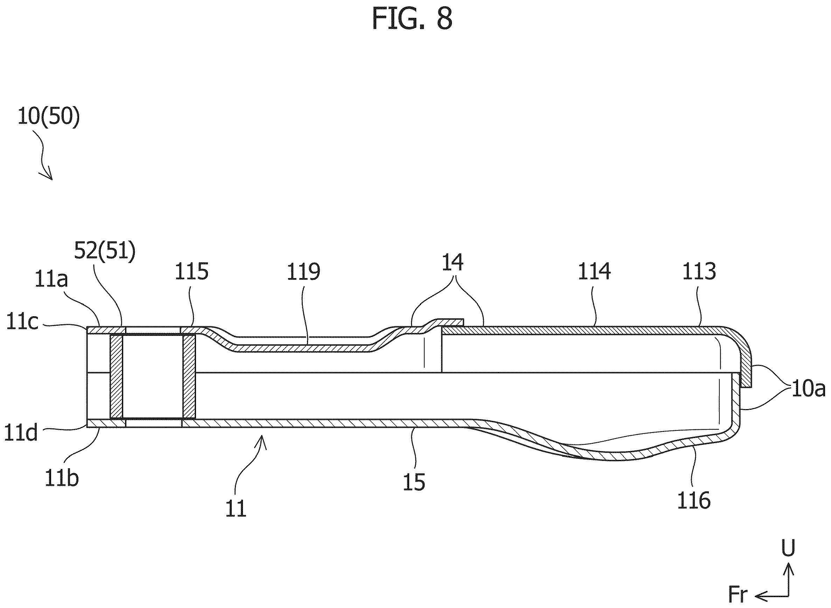

Next, each side frame 10 will be described in more detail. Figure 4 is an enlarged top view of the portion A shown in Figure 3, Figure 5 is an enlarged side view of the portion A shown in Figure 3 seen from the inner side in the vehicle width direction, Figure 6 is a sectional view of the front frame portion 11 along line B-B shown in Figure 4, Figure 7 is an enlarged perspective view including a lower surface 11b of the front frame portion 11, and Figure 8 is a sectional view of the front frame portion 11 along line C-C shown in Figure 4. Note that Figures 4 to 8 show a part including the side frame 10 on the right side out of the pair of left and right side frames 10 and 10. The side frame 10 on the left side is formed to be horizontally symmetrical with the side frame 10 on the right side.

Referring to Figure 3, each of the outer surface 10a of the side frame 10 in the vehicle width direction and an inner surface 10b of the side frame 10 in the vehicle width direction includes a part linearly extending in the vehicle front-rear direction and a curved part, which extend to be smoothly continued.

Referring to Figures 3 and 4, the front frame portion 11 of the side frame 10 includes a front frame base portion 111, a rear curved portion 112, a front frame inclined portion 113, a front curved portion 114, and a front frame distal end extending portion 115.

The front frame portion 11 is bent (curved) in a crank shape at the intermediate portion of the front frame portion 11 in the longitudinal direction such that a part (the front frame distal end extending portion 115) of the distal end of the front frame portion 11 is located on the outer side in the vehicle width direction relative to a part (front frame base portion 111) including the rear end of the front frame portion 11. In other words, in the example shown, each side frame 10 is bent in a crank shape in the vehicle width direction at the front part of the side frame 10 in the longitudinal direction and is also bent in a crank shape in the vehicle up-down direction at the intermediate portion of the side frame 10 in the longitudinal direction.

The front frame base portion 111 is a part extending forward from the front end of the intermediate frame portion 13. Each side support member 81 is disposed on the upper surface 11a of the front frame portion 11, specifically, the upper surface 11a of the front frame base portion 111 and is fixed to the front frame portion 11 via a fastening tool such as a bolt, which is not shown. In the example shown, the inner surface 10b extends straight in the vehicle front-rear direction, and the outer surface 10a is extremely slightly inclined to be spaced apart from the inner surface 10b as it extends toward the front side, in the front frame base portion 111.

The rear curved portion 112 is a part extending to be curved outward in the vehicle width direction and obliquely forward from the front end of the front frame base portion 111. In the rear curved portion 112, each of the outer surface 10a and the inner surface 10b is smoothly curved and extends in an arc shape in a view from the vehicle upper side, and is curved such that the front side thereof is located on the outer side in the vehicle width direction.

The front frame inclined portion 113 is a part extending obliquely forward such that it is continuous with the front end of the rear curved portion 112. In the example shown, the front frame inclined portion 113 is formed to be tapered in a view from the vehicle upper side. In other words, the width of the front portion of the front frame inclined portion 113 in the vehicle width direction is shorter than the width of the rear portion of the front frame inclined portion 113 in the vehicle width direction. In the front frame inclined portion 113, each of the outer surface 10a and the inner surface 10b linearly extends outward in the vehicle width direction and obliquely forward. In other words, in the front frame inclined portion 113, each of the outer surface 10a and the inner surface 10b is inclined outward in the vehicle width direction as it extends from the rear side toward the front side in a view from the vehicle upper side. In the front frame inclined portion 113, an inclination angle (inner angle) of the outer surface 10a with respect to the vehicle front-rear direction is smaller than an inclination angle (inner angle) of the inner surface 10b with respect to the vehicle front-rear direction.

The front curved portion 114 is a part extending to be curved toward the vehicle front side from the front end of the front frame inclined portion 113. In the front curved portion 114, each of the outer surface 10a and the inner surface 10b is smoothly curved and extends in an arc shape in a view seen from the vehicle upper side, and the front side thereof is curved to face the vehicle front side.

The front frame distal end extending portion 115 is a part extending toward the vehicle front side such that it is continuous with the front end of the front curved portion 114. The front end of the front frame distal end extending portion 115 constitutes a distal end of the front frame portion 11 (that is, a distal end of the side frame 10). The front coupling portion 52 is set in the vicinity of the front end of the front frame distal end extending portion 115 of the front frame portion 11. In the front frame distal end extending portion 115, each of the outer surface 10a and the inner surface 10b extends straight in the vehicle front-rear direction, and the outer surface 10a extends in parallel with the inner surface 10b.

Here, when the front frame portion 11 is seen from the upper side, the inner surface 10b of the front frame distal end extending portion 115 in the vehicle width direction is located on the outer side in the vehicle width direction relative to the outer surface 10a of the front frame base portion 111 in the vehicle width direction.

The outer surface 10a of the front frame base portion 111 of the front frame portion 11, the outer surface 10a of the intermediate frame portion 13, and the outer surface 10a of the rear frame portion 12 continuously and linearly extend substantially in the vehicle front-rear direction. The outer surface 10a of the front frame distal end extending portion 115 of the front frame portion 11 is located on the side further outward in the vehicle width direction than the outer surface 10a of the intermediate frame portion 13 and the outer surface 10a of the rear frame portion 12.

The inner surface 10b of the front frame base portion 111 of the front frame portion 11 and the inner surface 10b of the intermediate frame portion 13 continuously extend straight in the vehicle front-rear direction. The inner surface 10b of the rear frame portion 12 is curved inward in the vehicle width direction from the part near the rear end of the intermediate frame portion 13. The inner surface 10b of the front frame distal end extending portion 115 of the front frame portion 11 is located on the side further outward in the vehicle width direction than the inner surface 10b of the intermediate frame portion 13 and the inner surface 10b of the rear frame portion 12.

In the example shown, the width in the vehicle width direction of the part of the front frame portion 11 on the side further forward than the front end of the front frame base portion 111 is formed to decrease toward the front end. The width of the intermediate frame portion 13 in the vehicle width direction is set to be substantially the same width as the width of the front frame base portion 111 of the front frame portion 11 in the vehicle width direction, and the width of the rear frame portion 12 in the vehicle width direction is set to be greater than the width of the intermediate frame portion 13 in the vehicle width direction. The front frame distal end extending portion 115 has a width in the vehicle width direction that is equal to or less than half of the width of each of the intermediate frame portion 13 and the rear frame portion 12 in the vehicle width direction.

Referring to Figure 5, the upper surface 11a of the front frame portion 11 entirely extends substantially horizontally. The lower surface 11b of the front frame portion 11 is inclined to approach the upper surface 11a as it extends toward the front side in the front frame base portion 111 and horizontally extends in the front frame distal end extending portion 115. In addition, the width (the total height) of the front frame portion 11 in the vehicle up-down direction schematically decreases toward the front side, and the front frame portion 11 is formed to be substantially tapered in the vehicle up-down direction.

Referring to Figure 1, the width (in other words, the total height) of the intermediate frame portion 13 in the vehicle up-down direction is set to be greater than the width (in other words, the total height) of each of the front frame portion 11 and the rear frame portion 12 in the vehicle up-down direction.

Referring to Figure 5, the side frame 10 is formed as one member by an upper member 14 and a lower member 15 being joined to each other in the example shown. Each of the upper member 14 and the lower member 15 extends entirely from the front end to the rear end of the side frame 10.

The upper member 14 constitutes an upper portion of the side frame 10 and extends in the vehicle front-rear direction. In the example shown, the upper member 14 is a member made of two steel sheet parts and is configured as one member by the two members being joined to each other. For example, the upper member 14 has a groove-shaped section opened on the vehicle lower side and extends in the vehicle front-rear direction. An upper part of the front frame distal end extending portion 115 is constituted mainly of the member of the upper member 14 on the side of the front end.

The lower member 15 is a member that is joined to the upper member 14 from the lower side and extends in the vehicle front-rear direction. In the example shown, the lower member 15 is a member made of one steel sheet component that is continuous in the front-rear direction. The lower member 15 forms, together with the upper member 14, a tubular closed sectional structure in a sectional view perpendicular to the vehicle front-rear direction. In other words, the tubular closed sectional structure, specifically, a substantially rectangular closed sectional structure (in other words, a quadrangular tubular hollow structure) is formed by the upper member 14 and the lower member 15 being joined to each other. The closed sectional structure is provided over the entire side frame 10 in the vehicle front-rear direction.

Referring to Figures 5 and 7, the lower surface of the front frame distal end extending portion 115 is located on the side further upward than the rear portion of the lower surface of the front curved portion 114, and an inclined surface 114a that connects a step S in the vehicle up-down direction between the lower surface of the front frame distal end extending portion 115 and the rear portion of the lower surface of the front curved portion 114 is formed at the front portion of the lower surface of the front curved portion 114 in the present embodiment. Referring to Figure 7, the inclined surface 114a is inclined such that the outer part of the inclined surface 114a in the vehicle width direction is located on the front side in the vehicle front-rear direction relative to the inner part of the inclined surface 114a in the vehicle width direction. The inclined surface 114a of the side frame 10 on the right side shown in Figure 7 is inclined such that the part of the inclined surface 114a on the right (R) side (the outer part of the vehicle in the vehicle width direction) is located on the front side relative to the part of the inclined surface 114a on the left (L) side (the inner part of the vehicle in the vehicle width direction, in other words, the part of the center on the side of the center in the vehicle width direction). Also, in the example shown, the upper surface and the lower surface of the front frame distal end extending portion 115 extend substantially in parallel with each other. The front frame distal end extending portion 115 is formed to be thinner than the maximum thickness of the front curved portion 114 in the vehicle up-down direction. In the example shown, the front frame distal end extending portion 115 is formed to be the thinnest in the side frame 10 in the vehicle up-down direction and the vehicle width direction.

Referring to Figures 6 and 7, a lower surface of an outer portion 112a of the rear curved portion 112 in the vehicle width direction is recessed on the vehicle upper side, and a thickness t1 in the vehicle up-down direction at the outer portion 112a of the rear curved portion 112 in the vehicle width direction is set to be thinner than a thickness t2 in the vehicle up-down direction at an inner portion 112b of the rear curved portion 112 in the vehicle width direction (t1 < t2) in the present embodiment.

Specifically, in the example shown, the front frame portion 11 includes a recessed portion 116 that is provided in the lower surface of the outer portion 112a of the rear curved portion 112 in the vehicle width direction and is recessed on the vehicle upper side. The thickness (t1) of the part of the rear curved portion 112 corresponding to the recessed portion 116 is thinner than the thickness (t2) of the inner portion 112b of the rear curved portion 112 in the vehicle width direction. The recessed portion 116 is formed at least at a part of the outer portion of the front frame portion 11 in the vehicle width direction corresponding to the rear curved portion 112.

Referring to Figure 4 (see the thick dashed line) and Figure 7, the recessed portion 116 is extended in the front-rear direction from the rear curved portion 112 at the outer portion of the front frame portion 11 in the vehicle width direction in the example shown, although not particularly limited thereto. The front portion of the recessed portion 116 is extended up to the rear portion of the front curved portion 114, and the rear portion of the recessed portion 116 is extended at least up to the rear portion of the front frame base portion 111. Also, in the example shown, the recessed portion 116 reaches substantially the center location of the width of the rear curved portion 112 in the vehicle width direction from the outer surface 10a of the rear curved portion 112. The width of the part of the recessed portion 116 corresponding to the rear curved portion 112 in the vehicle width direction is set to be a width that is sufficiently greater than the width of the part of the recessed portion 116 corresponding to the front frame inclined portion 113 and the front curved portion 114 in the vehicle width direction. A portion (hereinafter, referred to as an edge recessed portion 116a) of the part of the recessed portion 116 located at the front frame base portion 111 is formed by denting inward a lower corner portion of the outer portion of the front frame base portion 111 in the vehicle width direction.

In the present embodiment, a front reinforcing member 117 and a rear reinforcing member 118 are provided inside the front frame portion 11 as shown by the dashed line in Figure 4. Note that the rear reinforcing member 118 is not shown in Figure 6, and the front reinforcing member 117 is not shown in Figure 8.

The front reinforcing member 117 is a member of the front frame portion 11 provided inside the curved portion 114 and mainly reinforcing the front curved portion 114. The rear reinforcing member 118 is disposed behind the front reinforcing member 117. The rear reinforcing member 118 is a member provided inside the front frame base portion 111 of the front frame portion 11 on the side further backward than the front frame inclined portion 113 and the rear curved portion 112 and mainly reinforcing the front frame base portion 111.

Each of the reinforcing members (117 and 118) is made of a steel sheet member after metal bending, drilling, and the like. An upper wall 11c and a lower wall 11d are connected by each of the reinforcing members (117 and 118) by each of the reinforcing members (117 and 118) being joined to the upper wall 11c and the lower wall 11d by arc welding or the like. In this manner, the front reinforcing member 117 mainly improves the strength of the front curved portion 114, while the rear reinforcing member 118 mainly improves the strength of the rear curved portion 112.

The front reinforcing member 117 includes a vertical wall 117a that connects the upper wall 11c of the front frame portion 11 to the lower wall 11d of the front frame portion 11 and extends in the front-rear direction. In the example shown, the front portion of the vertical wall 117a (front reinforcing member 117) is extended up to the rear portion of the front frame distal end extending portion 115, while the rear portion of the vertical wall 117a (front reinforcing member 117) is extended up to the region of the front frame inclined portion 113. In other words, the vertical wall 117a (front reinforcing member 117) extends to follow the extending direction of the front curved portion 114 inside the front curved portion 114, penetrates through the front curved portion 114, and extends up to the rear side of the front curved portion 114 from the front side of the front curved portion 114. The vertical wall 117a is disposed substantially at the center portion of the front curved portion 114 in the vehicle width direction, extends up to the lower wall 11d from the upper wall 11c, and extends to substantially follow the extending direction (curved shape) of the front curved portion 114. Moreover, an upper end of the vertical wall 117a is joined to the upper wall 11c, while a lower end of the vertical wall 117a is joined to the lower wall 11d.

In the example shown, the front reinforcing member 117 further includes a lower flange 117b. The lower flange 117b bulges outward in the vehicle width direction from a rear part of the lower end of the vertical wall 117a. In the example shown, the lower flange 117b is disposed substantially in the region of the front frame inclined portion 113. The lower flange 117b is formed substantially in a rectangular shape in a top view and is joined to the lower wall 11d of the front frame inclined portion 113.

The rear reinforcing member 118 includes a vertical wall 118a and a plurality of flanges 118b in the example shown. The vertical wall 118a includes a front-rear wall extending in the front-rear direction and a lateral wall extending inward in the vehicle width direction from a front end of the front-rear wall, for example, and is formed in an L shape as a whole. The vertical wall 118a is disposed on the side further inward in the vehicle width direction than the edge recessed portion 116a of the front frame base portion 111. An upper end of the vertical wall 118a is joined to the upper wall 11c, and a lower end of the vertical wall 118a is joined to the lower wall 11d.

In the example shown, the rear reinforcing member 118 includes four flanges 118b. Although not particularly limited, the rear reinforcing member 118 includes two flanges 118b extending in the vehicle width direction from the upper end and the lower end of the front-rear wall of the vertical wall 118a and two flanges 118b extending toward the vehicle rear side from the upper end and the lower end of the lateral wall of the vertical wall 118a. Each flange 118b on the upper side is joined to the upper wall 11c of the front frame base portion 111 (front frame portion 11), and each flange 118b on the lower side is joined to the lower wall 11d of the front frame base portion 111 (front frame portion 11).

Referring to Figures 4, 5, 7, and 8, at least one of the upper wall 11c and the lower wall 11d of the front frame distal end extending portion 115 is provided with a fragile portion 119 in the present embodiment. The fragile portion 119 is formed to be more fragile than a part of the front frame portion 11 on the side further backward than the front frame distal end extending portion 115. In the example shown, the fragile portion 119 is provided at the upper wall 11c. The fragile portion 119 is a recessed groove that is recessed toward the inside (toward the lower side) of the front frame portion 11 and extends in the vehicle width direction. Specifically, the fragile portion 119 is formed in the upper wall 11c of a member of the upper member 14 on the side of the front end. The recessed groove, which is the fragile portion 119, is formed throughout the entire upper wall 11c of the front frame distal end extending portion 115 in the vehicle width direction and is opened in the vehicle width direction.

In the vehicle front structure 100 configured as described above, the coupling portions 51 for coupling to the front side member 60 are provided at the front frame portion 11 and the intermediate frame portion 13 of each side frame 10 and the end portions of the frame main body 20 in the vehicle width direction, respectively. In other words, coupling points (fixing points) for coupling of the outer parts of the suspension frame 50 in the vehicle width direction to the vehicle body (front side members 60) are set not only near both the end portions in the vehicle front-rear direction but also at the intermediate portion in the vehicle front-rear direction where deflection is likely to occur. Therefore, the vehicle front structure 100 can reduce the amounts of deflection (for example, displacement in the up-down direction) at the intermediate portions of the side frames 10 due to a load of the drive portion M, which is a heavy object, and to improve holding rigidity (support rigidity) of the suspension frame 50 for the drive motion M during ordinary utilization, as compared with a conventional structure in which the fixing points for fixing of the outer parts of the suspension frame in the vehicle width direction to the vehicle body are set only near both the end portions in the vehicle front-rear direction. As a result, holding rigidity for the drive portion M is easily secured.

In addition, the vehicle front structure 100 can reduce occurrence of an unintended deformation mode in which the intermediate portions of the side frames 10 are bent on the vehicle upper side, for example, by the intermediate coupling portion 53 when an impact load due to collision (such as front collision or offset collision) on the vehicle front side acts on the vehicle front structure 100 from the viewpoint of passenger protection. As a result, the vehicle front structure 100 can reduce movement of the drive portion M mounted on the side frames 10 on the vehicle upper side when an impact load acts thereon.

Furthermore, in the vehicle front structure 100, the front frame portion 11 includes the front frame base portion 111 extending toward the vehicle front side from the front end of the intermediate frame portion 13, the rear curved portion 112 extending to be curved outward in the vehicle width direction and obliquely forward from the front end of the front frame base portion 111, the front frame inclined portion 113 extending obliquely forward such that it is continuous with the front end of the rear curved portion 112, the front curved portion 114 extending to be curved toward the vehicle front side from the front end of the front frame inclined portion 113, and the front frame distal end extending portion 115 extending toward the vehicle front side such that it is continuous with the front end of the front curved portion 114, and the inner surface 10b of the front frame distal end extending portion 115 in the vehicle width direction is located on the outer side in the vehicle width direction relative to the outer surface 10a of the front frame base portion 111 in the vehicle width direction. In other words, the front frame portion 11 is greatly bent (curved) in a crank shape at the intermediate portion of the front frame portion 11 in the longitudinal direction such that the entire front frame distal end extending portion 115 is completely offset on the outer side in the vehicle width direction relative to the entire front frame base portion 111. Therefore, if an impact load due to collision (such as front collision or offset collision) on the vehicle front side acts on the front end of the front frame portion 11, deformation in which the intermediate portion of the front frame portion 11 is displaced outward in the vehicle width direction is induced, and a portion of the impact load (energy) is absorbed. As a result, the vehicle front structure 100 can reduce movement of the front portion of each side frame 10 on the vehicle upper side, transmit an impact load to the rear end of the side frame 10 through the intermediate frame portion 13 and the rear frame portion 12, and securely transmit the impact load to the frame main body 20 in an initial stage of collision. In this manner, it is also possible to cause a site around the intermediate coupling portion 53 and the rear coupling portion 54 and the like to break, to release the coupling between the suspension frame 50 and each front side member 60 at the intermediate coupling portion 53 and the rear coupling portion 54, and to cause the rear portion of the suspension frame 50 to drop downward with the impact load in the initial stage of the collision. Therefore, the amount of displacement of the drive portion M into the passenger compartment behind the power compartment 1 is reduced, and displacement of the drive portion M into the passenger compartment is reduced at the time of front collision or the like. In this manner, since the vehicle front structure 100 can reduce displacement of the drive portion M into the passenger compartment at the time of front collision and also cause the rear portion of the suspension frame 50 to drop downward, for example, with the impact load, impact performance (that is, passenger protection performance) at the time of front collision or offset collision is easily secured. In addition, since the vehicle front structure 100 can reduce damage on the drive portion M disposed between the pair of side frames 10 and 10 by causing the intermediate portion of the front frame portion 11 to be deformed outward in the vehicle width direction at the time of collision. Also, a contact between a battery unit (not shown) disposed behind the rear portion of the suspension frame 50 and below the floor portion of the passenger compartment and the suspension frame 50 is avoided and damage on the battery unit is prevented by the rear portion of the suspension frame 50 dropping downward at the time of collision.

As described above, the vehicle front structure 100 according to the present embodiment has a structure capable of more reliably securing collision performance without leading to a decrease in holding rigidity for the drive portion M.

In the present embodiment, each side frame 10 is formed in a tubular shape, and the thickness t1 in the vehicle up-down direction at the outer portion 112a of the rear curved portion 112 in the vehicle width direction is set to be thinner than the thickness t2 in the vehicle up-down direction at the inner portion 112b of the rear curved portion 112 in the vehicle width direction. As a result, the sectional area on the outer side of the rear curved portion 112 of the front frame portion 11 in the vehicle width direction is smaller than the sectional area on the inner side of the rear curved portion 112 in the vehicle width direction, the strength of the outer portion 112a of the rear curved portion 112 in the vehicle width direction is lower than the strength of the inner portion 112b of the rear curved portion 112 in the vehicle width direction, and the front portion of the side frame 10 is more reliably and easily deformed outward in the vehicle width direction at the time of collision. Furthermore, since the lower surface of the outer portion 112a of the rear curved portion 112 in the vehicle width direction is recessed on the vehicle upper side, deformation of the front portion of the side frame 10 on the lower side is easily induced. This leads to an increase in amount of impact load (energy) absorbed by the deformation of the front frame portion 11. As a result, the vehicle front structure 100 can more reliably reduce movement of the front portion of the side frame 10 on the vehicle upper side, reduce occurrence of deformation at the rear portion of the side frame 10, reliably transmit an impact load to the rear end of the side frame 10, more reliably transmit the impact load to the frame main body 20, and reliably cause the rear portion of the suspension frame 50 to drop downward at the initial stage of collision. In this manner, it is possible to further reduce displacement of the drive portion M into the passenger compartment at the time of collision or the like, and collision performance (that is, passenger protection performance) at the time of front collision or offset collision is more easily and sufficiently secured.

In the present embodiment, the inclined surface 114a that connects the step S in the vehicle up-down direction between the lower surface of the front frame distal end extending portion 115 and the rear portion of the lower surface of the front curved portion 114 is formed at the front portion of the lower surface of the front curved portion 114, and the inclined surface 114a is inclined such that the outer part in the vehicle width direction is located on the front side in the vehicle front-rear direction relative to the inner part in the vehicle width direction. As a result, the front portion of each side frame 10 is further reliably and easily deformed outward in the vehicle width direction, and deformation of the front frame distal end extending portion 115 on the lower side is more easily induced at the time of collision.

In the present embodiment, the inside of the front curved portion 114 of the front frame portion 11 is provided with the front reinforcing member 117 including the vertical wall 117a that connects the upper wall 11c of the front frame portion 11 to the lower wall 11d of the front frame portion 11 and extends in the front-rear direction, and the inside of the front frame base portion 111 of the front frame portion 11 on the side further backward than the front frame inclined portion 113 and the rear curved portion 112 is provided with the rear reinforcing member 118 that connects the upper wall 11c to the lower wall 11d. In other words, neither the front reinforcing member 117 nor the rear reinforcing member 118 is disposed inside the rear curved portion 112 of the front frame portion 11. As a result, it is possible to relatively and appropriately lower the strength of the rear curved portion 112 as compared with the other sites. Therefore, deformation of moving outward in the vehicle width direction is further reliably and easily caused at the rear curved portion 112, which is a root part of the part (the part including the front curved portion 114, the front frame inclined portion 113, and the rear curved portion 112) bent (curved) in a crank shape on the outer side in the vehicle width direction at the time of collision. In this manner, it is possible to further reliably reduce movement of the front portion of each side frame 10 on the vehicle upper side, to reliably reduce occurrence of deformation at the rear portion of the side frame 10, to further reliably transmit an impact load to the frame main body 20, and to further reliably cause the rear portion of the suspension frame 50 to drop downward at the time of collision. It is thus possible to further reliably reduce displacement of the drive portion M into the passenger compartment at the time of collision or the like, and collision performance (that is, passenger protection performance) is further easily and sufficiently secured.

Here, there may be a case in which an impact load acts on the distal end portion of the front frame portion 11 from the vehicle front side and the obliquely lower side and a component force of the impact load in the up-down direction acts as an upward force on the front portion of the side frame 10. If the strength of the distal end portion of the front frame portion 11, which is a place where the impact load is input, is excessively high in this case, there is a concern that deformation in which the front portion of the side frame 10 jumps up may occur. To address such jumping-up, at least one of the upper wall 11c and the lower wall 11d of the front frame distal end extending portion 115 is provided with the fragile portion 119 that is formed to be more fragile than the part of the front frame portion 11 on the side further backward than the front frame distal end extending portion 115. In this manner, the distal end portion of the front frame portion 11 is easily deformed in the vehicle up-down direction by the fragile portion 119 immediately after collision. As a result, it is possible to reduce the upward force acting on the part of the front frame portion 11 on the side further backward than the distal end portion at the time of collision. Therefore, reduction of movement of the front portion of the side frame 10 on the vehicle upper side, reduction of occurrence of deformation at the rear portion of the side frame 10, and reliably transmission of an impact load to the frame main body 20 at the time of collision are achieved, and it is possible to further reliably cause the rear portion of the suspension frame 50 to drop downward at the time of the collision. In this manner, collision performance (that is, passenger protection performance) is more reliably secured.

The description of the present embodiment is an illustrative example for explaining the present invention and is not intended to limit the invention as claimed in the claims. Also, the configuration of each component in the present invention is not limited to that in the above embodiment, and various modifications can be made within the technical scope as claimed in the claims.

For example, the thickness t1 of the outer portion 112a of the rear curved portion 112 in the vehicle width direction may be the same as the thickness t2 of the inner portion 112b of the rear curved portion 112 in the vehicle width direction or may be slightly thicker than the thickness t2. The front reinforcing member 117 may be disposed only inside the rear curved portion 112 without being extended in the front-rear direction from the rear curved portion 112. Moreover, the front reinforcing member 117 and the rear reinforcing member 118 may not be provided. The fragile portion 119 is not limited to the one provided in the upper wall 11c, and may be provided in the lower wall 11d, or may be provided in both the upper wall 11c and the lower wall 11d. Furthermore, the fragile portion 119 is not limited to the recessed groove and may be a hole penetrating through the upper wall 11c or the lower wall 11d.

Also, although the lower member 15 of the side frame 10 is made of one member, the lower member 15 is not limited thereto and may be made of a plurality of members joined to each other. Moreover, although the upper member 14 is made of two members, the upper member 14 may be made of one member or three or more members. Furthermore, the vehicle to which the vehicle front structure 100 is applied is not limited to an electric vehicle and may be a vehicle using an internal combustion engine as a drive source, for example.

### [Reference Signs List]

- 1: Power compartment
- 2: Bumper member
- 3: Radiator support brace
- 4: Radiator lower cross frame
- 10: Side frame
- 10a: Outer surface
- 10b: Inner surface
- 11: Front frame portion
- 11a: Upper surface
- 11b: Lower surface
- 11c: Upper wall
- 11d: Lower wall
- 111: Front frame base portion
- 112: Rear curved portion
- 112a: Outer portion in vehicle width direction
- 112b: Inner portion in vehicle width direction
- 113: Front frame inclined portion
- 114: Front curved portion
- 114a: Inclined surface
- 115: Front frame distal end extending portion
- 116: Recessed portion
- 116a: Edge recessed portion
- 117: Front reinforcing member
- 117a: Vertical wall
- 117b: Lower flange
- 118: Rear reinforcing member
- 118a: Vertical wall
- 118b: Flange
- 119: Fragile portion
- 12: Rear frame portion
- 12a: Upper surface
- 13: Intermediate frame portion
- 13a: Upper surface
- 14: Upper member
- 15: Lower member
- 20: Frame main body
- 21: Front wall
- 22: Projecting portion
- 30: Arm holding portion
- 31: Front arm holding portion
- 32: Rear arm holding portion
- 50: Suspension frame
- 51: Coupling portion
- 52: Front coupling portion
- 52a: Bolt
- 53: Intermediate coupling portion
- 53a: Bolt
- 54: Rear coupling portion
- 54a: Bolt
- 60: Front side member
- 70: Suspension arm
- 71: Front arm portion
- 72: Rear arm portion
- 80: Support member
- 80a: Bush
- 81: Side support member
- 82: Rear support member
- 100: Vehicle front structure
- M: Drive portion
- M1: Drive shaft portion
- M2: Mounting shaft portion
- S: Step
- t1: Thickness in vehicle up-down direction at outer portion of rear curved portion in vehicle width direction
- t2: Thickness in vehicle up-down direction at inner portion of rear curved portion in vehicle width direction

## Claims

1. A vehicle front structure comprising a suspension frame including: a pair of side frames that extend in a vehicle front-rear direction and are spaced apart from each other in a vehicle width direction at a lower portion of a vehicle front portion; a frame main body that extends in the vehicle width direction and connects rear portions of the pair of side frames; and an arm holding portion that holds a suspension arm in a swingable manner, wherein a plurality of support members supporting a drive portion that generates a traveling power are attached to the suspension frame, **characterized in that**
the vehicle front structure includes a pair of front side members that extend in the vehicle front-rear direction and are spaced apart from each other in the vehicle width direction above the suspension frame,
each of the pair of side frames includes a front frame, a rear frame that is located on a vehicle rear side relative to the front frame portion and extends in the vehicle front-rear direction, and an intermediate frame portion that connects a rear end of the front frame portion to a front end of the rear frame portion,
a coupling portion for coupling to a corresponding front side member out of the pair of front side members is provided at each of the front frame portion, the intermediate frame portion, and an end portion of the frame main body in the vehicle width direction,
the front frame portion includes
a front frame base portion that extends toward a vehicle front side from a front end of the intermediate frame portion,
a rear curved portion that extends to be curved outward in the vehicle width direction and obliquely forward from a front end of the front frame base portion,
a front frame inclined portion that extends obliquely forward such that the front frame inclined portion is continuous with a front end of the rear curved portion,
a front curved portion that extends to be curved toward the vehicle front side from a front end of the front frame inclined portion, and
a front frame distal end extending portion that extends toward the vehicle front side such that the front frame distal end extending portion is continuous with a front end of the front curved portion, and
an inner surface of the front frame distal end extending portion in the vehicle width direction is located on an outer side in the vehicle width direction relative to an outer surface of the front frame base portion in the vehicle width direction.

2. The vehicle front structure according to claim 1, wherein
a lower surface of the front frame distal end extending portion is located on a side further upward than a rear portion of a lower surface of the front curved portion,
an inclined surface that connects a step in a vehicle up-down direction between the lower surface of the front frame distal end extending portion and the rear portion of the lower surface of the front curved portion is formed at a front portion of the lower surface of the front curved portion, and
the inclined surface is inclined such that an outer part of the inclined surface in the vehicle width direction is located on a front side in the vehicle front-rear direction relative to an inner part of the inclined surface in the vehicle width direction.

3. The vehicle front structure according to claim 1, wherein
each of the pair of side frames is formed in a tubular shape,
a lower surface of an outer portion of the rear curved portion in the vehicle width direction is recessed on a vehicle upper side, and
a thickness in a vehicle up-down direction at the outer portion of the rear curved portion in the vehicle width direction is set to be thinner than a thickness in the vehicle up-down direction at an inner portion of the rear curved portion in the vehicle width direction.

4. The vehicle front structure according to claim 1, wherein
each of the pair of side frames is formed in a tubular shape,
inside of the front curved portion of the front frame portion is provided with a front reinforcing member including a vertical wall that connects an upper wall of the front frame portion to a lower wall of the front frame portion and extends in a front-rear direction, and
inside of the front frame base portion of the front frame portion on a side further backward than the front frame inclined portion and the rear curved portion is provided with a rear reinforcing member that connects the upper wall to the lower wall.

5. The vehicle front structure according to claim 1, wherein
each of the pair of side frames is formed in a tubular shape, and
at least one of an upper wall and a lower wall of the front frame distal end extending portion is provided with a fragile portion that is formed to be more fragile than a part of the front frame portion on a side further backward than the front frame distal end extending portion.
